(19) Europäisches Patentamt
European Patent Office
Office européen des brevets

(11) Veröffentlichungsnummer : **0 072 353**
**B1**

# (12) EUROPÄISCHE PATENTSCHRIFT

(45) Veröffentlichungstag der Patentschrift : **15.04.87**

(21) Anmeldenummer : **82810330.9**

(22) Anmeldetag : **06.08.82**

(51) Int. Cl.⁴ : **B 29 D 11/02**, B 29 D 11/00, G 02 B 1/04, G 02 C 7/04

## (54) Getönte Kontaktlinsen und Verfahren zu deren Herstellung.

(30) Priorität : **12.08.81 US 292325**

(43) Veröffentlichungstag der Anmeldung : **16.02.83 Patentblatt 83/07**

(45) Bekanntmachung des Hinweises auf die Patenterteilung : **15.04.87 Patentblatt 87/16**

(84) Benannte Vertragsstaaten : **AT BE CH DE FR IT LI LU NL SE**

(56) Entgegenhaltungen :
**DE-A- 2 734 458**
**FR-A- 1 411 969**
**FR-A- 1 499 774**
**FR-A- 2 355 642**
**GB-A- 1 004 424**
**W.F. BEECH: "Fibre-reactive dyes", 1970, Seiten 204-209, Logos Press Ltd., London, G.B.**

(73) Patentinhaber : **AGRIPAT AG**
**Schwarzwaldallee 215**
**CH-4058 Basel (CH)**

(72) Erfinder : **Su, Kai Chiang**
**440 Millbank Place**
**Roswell Georgia 33075 (US)**

(74) Vertreter : **Stamm, Otto et al**
**Patentabteilung der CIBA-GEIGY AG Postfach**
**CH-4002 Basel (CH)**

**EP 0 072 353 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft getönte bzw. leicht gefärbte Kontaktlinsen und Verfahren zu deren Herstellung.

Insbesondere betrifft die Erfindung Kontaktlinsen, die polymere Linsenmaterialien enthalten, in denen reaktive Farbstoffe kovalent an Monomereinheiten des Polymergrundgerüsts gebunden wurden. Die Erfindung ist von besonderem Interesse auf dem Gebiet sogenannter hydrophiler oder « weicher (soft) » Kontaktlinsen, die gewöhnlich als Hydrogellinsen bezeichnet werden. Viele der bekannten Methoden zur Tönung oder Färbung von Kunststoffmaterialien sind für die praktische Färbung von Kontaktlinsen, insbesondere von hydrophilen Kontaktlinsen, ungeeignet. Beispielsweise können solche Methoden, bei denen ein färbendes Mittel in einem Kunststoff durch Auflösen oder Dispergieren eines Farbstoffs oder Pigments in einem Monomervorläufer oder in der Polymermatrix dispergiert wird, nicht verwendet werden, um zufriedenstellende wasserabsorbierbare Materialien zu erzielen. Dies kommt daher, daß Wasser eine Wanderung des färbenden Mittels innerhalb des Kunststoffmaterials und ein Auslaugen des Farbstoffs daraus bewirkt. Diese Wanderung kann darüberhinaus während der Hitze-Sterilisationsbehandlungen beschleunigt werden, die gewöhnlich bei hydrophilen Linsen verwendet werden, da das Erhitzungsverfahren in den meisten Fällen die Polymermatrix ausdehnt. Daher sind die meisten üblichen Methoden zur Herstellung harter Kontaktlinsen, bei denen die Linsenrohlinge getönt oder gefärbt werden, zur Herstellung von weichen Linsen nicht brauchbar.

Eine Alternative zur Färbung von Kunststoffmaterialien ist die Verwendung von Druck-, Transfer- oder Beschichtungsverfahren.

Nach diesem Verfahren wird ein färbendes Mittel an der Oberfläche des Kunststoffs zum Haften gebracht. Diese Methode ist auch unbrauchbar zur Färbung von Wasser-absorbierenden Kunststoffen, wie sie zur Herstellung von hydrophilen Kontaktlinsen verwendet werden. Wenn man ein Kunststoffmaterial, das nach diesem Verfahren gefärbt ist, in Wasser quellen läßt, so quillt die aufgetragene Schicht des Färbemittels nicht so stark wie der Kunststoff selbst. Daher sondert sich das färbende Mittel von der Oberfläche des Kunststoffs ab. Jedenfalls verhindert eine einfache Transfer-Färbemethode nicht das Problem der Auslaugung und wird immer durch das Ausmaß der physikalischen Haftung des färbenden Mittels an der Oberfläche begrenzt.

Es wurden mehrere Methoden in der Literatur beschrieben, durch die eine gesamte weiche Kontaktlinse oder ein Teil davon unter Anwendung eines Werkzeugs, wie eines Pinsels, angefärbt oder bedruckt wird. Beispielsweise wird in Contact Lens Forum, Band 3, März 1978, Seiten 13-17, ein Verfahren beschrieben, bei dem die Oberfläche einer Linse durch ein chemisches Druckverfahren gefärbt wird. Diese Methode ist jedoch nicht völlig zufriedenstellend, da festgestellt wird, daß die Farbe nach einigen Autoklaven-Behandlungen zum Verblassen neigt.

Auch die Verwendung von wasserlöslichen Farbstoffen ist zur Herstellung von insbesondere weichen Kontaktlinsen nicht zufriedenstellend. Wasserlösliche Farbstoffe werden während wiederholter thermischer Stabilisationsbehandlungen ausgelaugt. Darüberhinaus könnten wasserlösliche Farbstoffe bei langzeitigem Kontakt mit dem Auge das Augengewebe färben. Auf diese Weise würde das in American Journal of Optometry and Physiological Optics, Band 54, Seiten 160-164 (1977) « Methods of Tinting Soflens® Contact Lenses » beschriebene Verfahren zu keiner Lösung des Problems der Herstellung von brauchbaren getönten weichen Kontaktlinsen führen.

Zusätzlich zu den Problemen, die bei der Anwendung von hydrophilem Kunststoffmaterial bei der Herstellung dieser Linsen auftreten, liegt eine weitere Komplikation vor, die durch die Abmessungen der Linse selbst herbeigeführt wird.

Übliche harte Kontaktlinsen, die im allgemeinen aus Formulierungen hergestellt werden, die als Haupt-Comonomeres Methylmethacrylat enthalten, weisen im allgemeinen einen Durchmesser auf, der geringer ist als der Durchmesser der Kornea des Auges. Es ist daher möglich, eine über ihre gesamte Ausdehnung gefärbte Linse zu verwenden. Im Gegensatz hierzu weisen weiche Kontaktlinsen sehr häufig einen Durchmesser auf, der größer ist als der der Kornea. Aus diesem Grunde würde eine gleichmäßig gefärbte weiche Kontaktlinse stark gegenüber der weißen Sklera des Auges hervortreten. Um eine neutral aussehende Kontaktlinse herzustellen, wäre es daher notwendig, dass sie eine gefärbte zentrale Fläche und einen klaren äusseren Umfang aufweisen würde.

Wie in der US-PS 4 252 421 festgestellt, führt die Herstellung derartiger Linsen zu Fabrikationsschwierigkeiten. Diese liegen in der Verhinderung des Ausblutens der Farbe aus dem zentralen Teil in den äußeren klaren Teil. Die gefärbte Fläche und die klare Fläche sollten darüberhinaus konzentrisch sein und während der Herstellung leicht ausgerichtet werden können. Schließlich ist es wesentlich, daß kein Auslaugen der Farbe auftritt, weder in die Tränenflüssigkeit, noch in die Sterilisationslösung.

Die US-PS 4 252 421 beschreibt ein Verfahren zur Herstellung von weichen Kontaktlinsen, die einen getönten zentralen Kern und ein äußeres Linsenelement aufweisen, das gewöhnlich klar ist. Der gefärbte zentrale Kern wird aus einem getönten Knopf hergestellt, der seinerseits aus einem Monomeren-Gemisch polymerisiert wird, das einen Farbstoff als Comonomeres enthält. So sind der wasserunlösliche Farbstoff oder die Farbstoffe ein Teil des Grundgerüsts des Polymeren. Alternativ kann ein wasserunlöslicher Farbstoff dem Comonomerengemisch zugesetzt werden, und diese Kombination polymerisiert werden, wodurch der Farbstoff in die Polymermatrix einbezogen wird. Aufgrund der Unlöslichkeit des Farbstoffs

wird er aus dem polymerisierten Knopf nicht ausgeblutet oder ausgelaugt. Es werden auch zwei Verfahren zur Herstellung der Kontaktlinse beschrieben. Die erste Methode besteht darin, den getönten Knopf zu polymerisieren, den getönten Knopf in eine Form einzusetzen und ein Hydrogel-Comomeren-Gemisch um den getönten Knopf zu gießen und dieses Gemisch zu polymerisieren. Eine alternative Methode zur Bildung der Linse besteht darin, zuerst den klaren äußeren Knopf zu polymerisieren und anschließend eine zentral gelegene Öffnung durch den Knopf zu bilden. Das Comonomerengemisch, das den Farbstoff enthält, wird dann in die Öffnung eingesetzt und polymerisiert.

Diese Verfahrensweise weist verschiedene wesentliche Nachteile auf. Bei der Methode, bei der ein wasserunlöslicher Farbstoff lediglich in die Polymermatrix eingefügt wird, treten die vorstehend erwähnten Schwierigkeiten auf. Im Gegensatz zu einer gleichmäßigen Zusammensetzung einer üblichen hydrophilen Kontaktlinse sind die nach der US-PS 4 252 421 hergestellten Linsen eine Kombination von harten Linsenmaterialien und weichen oder Hydrogel-Linsenmaterialien. Darüberhinaus erfordert die Herstellung dieser Linsen zahlreiche getrennte Fabrikations- und Polymerisationsstufen. Außerdem müssen Linsen dieser Art für jede Verordnung speziell hergestellt werden. Daher muß der Verteiler von Kontaktlinsen ein umfangreiches Inventar mit sich führen, um den Bereich an Verordnungen und Farben, die normalerweise gewünscht werden, abzudecken. Schließlich führt die Verwendung einer Kombination von Hart-Weich-Linsen im allgemeinen zu einer Wellen- oder Faltenbildung der Kante bei der Hydratisierung, was für den Träger unangenehm ist.

Die US-PS 4 157 892 beschreibt ein Verfahren zur Färbung von Wasser-absorbierendem Kunststoff, das vier Stufen aufweist. Die erste Stufe besteht in der Herstellung eines Kupplermonomeren oder Kupplerpolymeren. Ein Polymerisationsradikal wird in ein Kupplermittel eingebracht zur Erzielung eines polymerisierbaren Kupplermonomeren, aus dem ein Kupplerpolymeres hergestellt werden kann. Jeder der in der ersten Stufe erhaltenen Kuppler wird anschließend mit einem Wasser-absorbierenden Kunststoff in der Form eines Monomeren oder eines Polymeren in Anwesenheit eines Polymerisationsinitiators copolymerisiert oder polymerisiert, unter Bildung eines Wasser-absorbierenden Kunststoffs, der sich färben lässt. Das so hergestellte Material wird zu einem Zwischenprodukt geformt, das die gleichen Abmessungen aufweist, wie die des gewünschten Endprodukts, wie eine wasserabsorbierende Kontaktlinse. Schließlich wird das Zwischenprodukt durch Eintauchen der Linse in eine wässrige Lösung eines Diazoniumdoppelsalzes, das als Entwickler wirkt, gefärbt. Das Eintauchen erfolgt solange, wie es erforderlich ist, um das Quellen des Zwischenprodukts zu bewirken, wodurch die Diazokomponente in den Kunststoff eindringen kann. Dann wird die Lösung auf einen optimalen pH-Wert eingestellt, um eine Kupplungs-reaktion zu bewirken und dem Azofarbstoff die Farbentwicklung in dem Endprodukt zu ermöglichen. Die Erzielung von teilweise gefärbten Zwischenprodukten ist durch Anwendung von Ultraviolettstrahlung auf die Anteile des Kunststoffs möglich, die nicht gefärbt werden sollen, wodurch die Diazokomponenten in diesen Anteilen zerstört werden.

Auch diese Methode weist den Nachteil auf, daß sie verfahrensmäßig ziemlich kompliziert ist. Die Verfahrensweise zur Herstellung des Materials, bei dem die Farbe zuletzt entwickelt werden soll, muß in einer Reihe verschiedener Stufen durchgeführt werden, und es muß sorgfältig darauf geachtet werden, daß keine vorzeitige Entwicklung des Azofarbstoffs in dem Linsenmaterial erfolgt. Darüberhinaus wird der Azofarbstoff-Vorläufer über das gesamte Linsenmaterial dispergiert, was zu Unterschieden der Farbintensität je nach der Dicke des Linsenmaterials führen kann. Zur Bereitstellung gefärbter Linsen für eine Vielzahl von Verordnungen ist es darüberhinaus für den Verteiler wiederum notwendig, ein großes Inventar bereitzuhalten. Außerdem ist es ersichtlich, daß diese Verfahrensweise nur zur Verwendung mit einem speziell präparierten Linsenmaterial, das einen Kuppler enthält, geeignet ist. Es ist daher nicht möglich, das in der US-PS 4 157 892 beschriebene Verfahren mit üblichen hydrophilen Linsenmaterialien, die gegenwärtig im Gebrauch sind, zu verwenden. Darüberhinaus kann die Anwendung von Kupplern des in dieser Literaturstelle beschriebenen Typs zu Polymermaterialien schlechterer Qualität im Vergleich mit Materialien, die gegenwärtig für diesen Zweck verwendet werden, führen.

In der GB-A-1 004 424 werden als zur Färbung von Kontaktlinsen geeignet solche Farbstoffe offenbart, die üblicherweise zum Färben von Zellulosetextilmaterialien verwendet werden. Diese Lehre wird durch den Hinweis konkretisiert, dass gute Ergebnisse mit Azo-, Küpen- und Reaktivfarbstoffen erzielt werden können. Der einzige spezifisch genannte Reaktivfarbstoff ist Cibacronblau 3G oder Procionbrilliantblau RS. Dieser Reaktivfarbstoff kann mit Cellulose allenfalls eine Sulfonsäureesterbindung eingehen. Eine solche Sulfonsäureesterbindung ist aber, im Gegensatz zu beispielsweise einer Etherbindung, nicht inert gegenüber hydrolytischen Einflüssen, z. B. durch Sterilisationslösungen.

Ferner wird in der GB-A 1 004 424 nicht darauf hingewiesen, dass für das Färben von Kontaktlinsen Temperaturen bis zu 40 °C nicht nur ausreichend, sondern auch vorteilhaft sind. Farbstoffe wie das vorgeschlagene Cibacronblau 3G binden tatsächlich bei Temperaturen bis 40 °C normalerweise nicht an Kontaktlinsen, sondern erst bei höheren Temperaturen. Bei Temperaturen bis zu 40 °C finden praktisch keine Zersetzung oder Deformation des Hydrogelsubstrates statt, während bei höheren Temperaturen solche Schädigungen an Linsen auftreten können.

Ein Ziel der vorliegenden Erfindung ist daher die Vermeidung der Probleme, die bei den Methoden des Stands der Technik auftreten. Insbesondere ist es ein Ziel der vorliegenden Erfindung, ein Verfahren zur Tönung oder Färbung von Kontaktlinsen bereitzustellen, das ohne Notwendigkeit komplizierter Verfahrensweisen und spezieller Ausrüstungen durgegeführt werden kann.

Ein weiteres Ziel der vorliegenden Erfindung ist die Bereitstellung eines verfahrens zur Färbung von Linsen, die als Warenbestand in einem ungetönten Zustand gehalten werden können oder die bereits auf dem Markt verfügbar sind und/oder dem Patienten verschrieben wurden.

Weitere Ziele der Erfindung umfassen die Bereitstellung eines Verfahrens zur Herstellung einer Kontaktlinse, die völlig natürlich beim Tragen am Auge erscheint, d. h. von Linsen mit einem zentralen gefärbten Teil, das die Kornea bedeckt, und klaren Kanten über dem Teil der Linse, der die Sklera bedeckt. Ein weiteres Ziel der Erfindung ist die Bereitstellung von Kontaktlinsen, die die Farbe während langer Zeiträume und wiederholter chemischer und/oder Hitzesterilisationsbehandlungen behalten. Ein weiteres Ziel der Erfindung ist die Herstellung von Kontaktlinsen mit einem weiten Bereich von Farben und Farbkombinationen durch einfache mechanische Verfahrensweisen.

Ein Gegenstand der Erfindung ist eine Kontaktlinse, von der zumindest ein Teil gefärbt ist, die ein copolymeres Hydrogelmaterial enthält, das Hydroxyl-, Amino-, Amido- oder Mercaptogruppen enthält, dadurch gekennzeichnet, dass zumindest ein reaktiver Farbstoff der Formel I oder II durch Äther-, Thioäther-, Amino- oder Amidogruppen kovalent von aussen an das Polymergerüst gebunden ist.

Für die Verwendung zur Herstellung der neuen Linsen ist eine Vielzahl von Polymeren geeignet. Das einzige Erfordernis liegt darin, daß die Monomeren mindestens eine der funktionellen Gruppen enthalten, die geeignet sind zur Reaktion mit einem reaktiven Farbstoff, entweder vor oder nach der Polymerisation der Monomeren unter Bildung des Polymeren.

Die Zusammensetzung des Linsenmaterials selbst kann innerhalb weiter Bereiche variieren, das einzige Erfordernis liegt in der Anwesenheit von mindestens einer Komponente in dem Monomerengemisch, die das Polymere mit den erforderlichen exoskeletalen funktionellen Gruppen versieht. Besonders geeignet als Monomere für diesen Zweck sind Hydroxyalkylester von polymerisierbaren ungesättigten Säuren. Unter derartigen Estern wurde Hydroxyethylmethacrylat (HEMA) sehr verbreitet verwendet ; Linsen, die aus derartigen Materialien hergestellt sind, werden beispielsweise in der US-PS 2 976 576 und Re 27 401 beschrieben.

Im allgemeinen jedoch kann jedes polymere Material, das zur Verwendung bei der Herstellung einer Kontaktlinse geeignet ist, ebenfalls zur Herstellung der erfindungsgemässen getönten Linsen verwendet werden, mit der Massgabe, dass mindestens einer der monomeren Bestandteile, die das Material bilden, die exoskeletale funktionelle Gruppe enthält, die mit dem reaktiven Farbstoffmolekül reagieren kann. Daher kann die vorliegende Erfindung auf eine Vielzahl von bekannten polymeren Linsenmaterialien angewendet werden. Dies ergibt auch die Möglichkeit, getönte Kontaktlinsen gemäß der Erfindung aus dem breiten Bereich bereits verfügbarer Materialien sowie aus neuen Kontakktlinsenmaterialien, die noch entwickelt oder auf den Markt gebracht werden müssen, herzustellen.

Zusätzlich zu den Hydroxyalkylestern ungesättigter Säuren können folgende monomere Materialien als typische Beispiele für Comonomere dienen, die zusammen mit Monomeren verwendet werden können, die die gewünschten funktionellen Gruppen ergeben : Acrylsäure und Methacrylsäure ; Alkyl- und Cycloalkyl-acrylate und -methacrylate ; N-(1,1-Dimethyl-3-oxobutyl)-acrylamid ; und heterocyclische N-Vinylverbindungen, die eine Carbonylfunktion benachbart zum Stickstoff im Ring enthalten, insbesondere N-Vinyllactame, wie N-Vinylpyrrolidon. Darüberhinaus können ein oder mehrere vernetzende Mittel, wie sie bekannt sind, verwendet werden, um ein polymeres Material mit optimalen Eigenschaften zu ergeben. Beispiele für derartige Vernetzungsmittel umfassen Trimethylolpropantrimethacrylat, Äthylenglykoldimethacrylat (EDMA) und Diäthylenglykol-bis-allylcarbonat.

Brauchbare reaktive Farbstoffe gemäß der Erfindung werden gewöhnlich bezeichnet als « Ätherbindungen bildende reaktive Farbstoffe », da die reaktive Gruppe oder die reaktiven Gruppen dieser bekannten Farbstoffklasse mit Cellulose unter Bildung einer Ätherbindung im Gegensatz zu beispielsweise einer Esterbindung reagieren. Derartige reaktive Farbstoffe, die Ätherbindungen bilden, werden allgemein beschrieben in FIBRE-REACTIVE DYES, Kapitel VI von W. F. Beech, SAF, International Inc., New York (1970).

Man nimmt an, daß diese Klasse reaktiver Farbstoffe mit Hydroxyl-, Amino-, Amido- oder Mercaptogruppen, die in dem Hydrogel-Polymer-Netz von Kontaktlinsenmaterialien vorhanden sind, primär durch nukleophile Addition unter Bildung einer kovalenten Bindung damit, reagieren.

Eine Vielzahl handelsüblicher Farbstoffe, die über die nukleophile Substituition reaktionsfähig sind, ist für die Verwendung bei der Herstellung der erfindungsgemäßen Kontaktlinsen geeignet. Darüberhinaus kann praktisch jeder gewünschte Farbton oder jede Tönung durch die Verwendung eines speziellen reaktiven Farbstoffs oder einer Kombination reaktiver Farbstoffe erzielt werden.

So können Farbstoffe, die eine aktive Doppelbindung enthalten, die geeignet ist zur Addition an die funktionelle Gruppe außen am Polymergerüst, erfindungsgemäß verwendet werden. Beispielsweise ist eine exoskeletale Bindung, die durch ein Brückenglied aktiviert ist, wie eine $—SO_2$-, —SO- oder —CO-Gruppe besonders geeignet zur Verwendung gemäß der Erfindung. In gleicher Weise können Farbstoffe mit funktionellen Gruppen, die Additionsreaktionen mit exoskeletalen Doppelbindungen des Polymeren eingehen können, verwendet werden.

Unter den Typen von reaktiven Farbstoffen, die zur erfindungsgemäßen Verwendung geeignet sind, können folgende allgemeine Klassen genannt werden : reaktive Farbstoffe, die Vinylsulfonvorläufer enthalten, wie β-Sulfatoäthylsulfonyl-, β-Sulfatäthylsulfonamido-, β-Hydroxyäthylsulfonyl- und β-Hydroxyäthylsulfonamido-Substituenten, sowie geeignete Derivate davon, Farbstoffe, die Acryloylamino-, β-

Chlorpropionylamino- und β-Sulfatopropionylaminogruppen und verwandte reaktive Gruppen enthalten ; Farbstoffe die β-Phenylsulfonylpropionylaminogruppen enthalten ; Farbstoffe, die β-Sulfato- oder β-Chloräthylsulfamoylgruppen enthalten ; Chloracetylfarbstoffe ; α-Bromacryloylfarbstoffe ; sowie viele andere reaktive Farbstoffe, die zur Verwendung bei der Färbung natürlicher und synthetischer Fasern, insbesondere Cellulose und Wolle, entwickelt wurden und durch nukleophile Addition wirken. Es gibt zwar auf dem Gebiet der Anwendung von reaktiven Farbstoffen mit Gewebefasermaterial zahlreiche Beispiele, jedoch wurde die Anwendung dieser Farbstoffe bei der Herstellung von getönten Kontaktlinsen bisher nicht beschrieben.

Einige typische Beispiele für handelsübliche Farbstoffe, die zur erfindungsgemäßen Verwendung geeignet sind, sind : Farbstoff-$SO_2$—$CH_2CH_2$—O—$SO_3Na$ (Remazol), Farbstoff-$SO_2NHCH_2CH_2OSO_3Na$ (Levafix), Farbstoff-NH—OC—$CH_2CH_2SO_2C_6H_5$ (Solidazol), Farbstoff

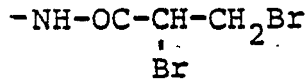

(Lanasol), Farbstoff

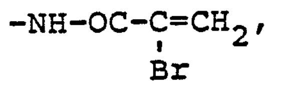

Farbstoff-$NHCH_2OH$ (Calcobond).

Gleichermaßen fällt in den Rahmen der Erfindung die Anwendung von Farbstoffen, die mehr als eine reaktive Gruppe enthalten, die geeignet ist zur Bildung einer kovalenten Bindung durch nukleophile Addition mit Hydroxyl-, Amino-, Amido- oder Mercaptogruppen, die in dem Hydrogelpolymernetz der Kontaktlinsenmaterialien vorhanden sind.

Erfindungsgemässe reaktive Farbstoffe, die geeignet sind zur Bildung einer kovalenten Bindung mit den Hydroxyl-, Amino-, Amido- oder Mercaptogruppen, die in dem Kontaktlinsen-Hydrogelmaterial vorhanden sind, sind solche mit den allgemeinen Formeln

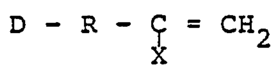 (I)

oder

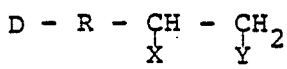 (II)

worin

D der Rest eines organischen Farbstoffs ist ;

R eine zweiwertige organische, Elektronen anziehende Gruppe ist, idie geeignet ist, einen Abzug von Elektronen von den C-Atomen in den Gruppen C=$CH_2$ oder CH—$CH_2$ der Formeln I und II zu bewirken und diese so zu aktivieren ;

X Wasserstoff oder Halogen ist und

Y eine austretende Gruppe ist, oder Gemische davon.

Der Rest D kann vorzugsweise der Rest eines Azo-, Phthalocyanin-, Azomethin-, Nitro- oder Anthrachinon-Farbstoffs sein.

Die reaktiven Farbstoffe der Formel II eliminieren in den Reaktionsmedien HY, wodurch Zwischenprodukte der Formel I gebildet werden, die anschließend durch nukleophile Addition reagieren.

Die zweiwertige Gruppe —R— ist vorzugsweise direkt an einen aromatischen Kernkohlenstoff von D gebunden oder daran über eine aliphatische Gruppe, wie eine Alkylengruppe, z. B. eine Niedrigalkylengruppe, gebunden. Am bevorzugtesten ist —R— direkt an ein Kernkohlenstoffatom von D gebunden.

Geeignete zweiwertige Gruppen R umfassen —CO—, —$SO_2$—, —SO—, —NHCO—, —$NHSO_2$—, —$SO_2NH$— und dgl. Am bevorzugtesten hat R die bedeutung von —$SO_2$—, —$SO_2HN$—, —CO— oder —NHCO—.

Wenn X Halogen ist, so ist es am bevorzugtesten Chlor oder Brom.

Geeignete austretende Gruppen Y umfassen —Cl, —Br, —OH, Diniedrigalkylamino,

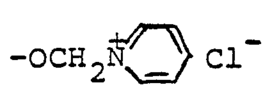

—$SO_2$-Phenyl, —$OSO_3^-$—$Z^+$, worin $Z^+$ ein Kation ist, —$OSO_3R_1$ oder —$OSO_2R_1$, worin $R_1$ in jedem Falle Alkyl, Aryl, Aralkyl oder Alkaryl ist.

Wenn $R_1$ Alkyl ist, so ist es vorteilhaft Alkyl mit 1 bis 6 Kohlenstoffatomen, vorzugsweise Alkyl mit 1 bis 4 Kohlenstoffatomen. Wenn $R_1$ Aryl ist, so ist es vorzugsweise Phenyl oder Naphthyl. Wenn $R_1$ Alkaryl ist, so ist es vorzugsweise Niedrigalkyl-substituiertes Phenyl, wie Tolyl oder Xylyl, und wenn $R_1$ Aralkyl ist, ist es vorzugsweise Phenylniedrigalkyl, wie Benzyl oder Phenethyl.

Die reaktiven Farbstoffe der Formel I und II, die als solche bekannt sind, bilden eine kovalente Bindung mit dem Hydroxyl-, Amino-, Amido- oder Mercaptogruppen, die in einem Hydrogelpolymernetz vorhanden sind, in einem wässrigen Medium mit einem pH-Wert von 9 oder größer und einer Temperatur von bis zu 40 °C. Diese Farbstoffe der Formel I oder II sind geeignet zur Färbung von Hydrogel-Kontaktlinsen, ohne wesentliche Zersetzung oder Deformation des Hydrogelsubstrats, bedingt durch die milden Reaktionsbedingungen.

Durch die Erfindung werden neue getönte Linsen mit einer außergewöhnlichen Farbbeständigkeit und Farbgleichmäßigkeit bereitgestellt. Je nach den Erfordernissen eines speziellen Falles kann der Farbstoff auf beide Oberflächen einer Linse oder nur auf eine Oberfläche aufgetragen werden. Darüberhinaus ist es mögliche, die Linse nur in einem speziellen Teil zu färben. So ist es möglich, ohne Schwierigkeiten Linsen herzustellen, mit z. B. gefärbten Zentralteilen und klaren Kanten oder mit einem ringförmig gefärbten Anteil, der der Iris entspricht. Die Methode kann beispielsweise auch angewendet werden auf den Auftrag von identifizierenden Merkmalen auf Linsen, wie zum Anzeigen der konkaven oder konvexen Oberfläche einer flexiblen Linse.

Zwar wird die Tönung oder Färbung durch Kontakt einer oder beider Oberflächen der Linsen mit einer wässrigen Lösung des Farbstoffs bewirkt, jedoch werden auch innere Teile der Linse bis zu einem gewissen Ausmaß getönt oder gefärbt, bedingt durch die Diffusion des Farbstoffs während der Reaktionszeit.

Im allgemeinen wird die Bildung einer kovalenten Bindung zwischen dem Linsenmaterial und dem reaktiven Farbstoff durch einfachen Kontakt der Farbstofformulierung, wie einer mildbasischen wässrigen Lösung, mit dem Linsenmaterial bewirkt, bis die Reaktion vollständig ist. Falls beide Oberflächen einer Linse gefärbt werden sollen, wird die Linse an beiden Oberflächen mit einer Formulierung des reaktiven Farbstoffs in Kontakt gebracht. Der Ton der Farbe wird durch die Kontaktzeit mit der Farbstofformulierung sowie durch die Reaktionsfähigkeit des Farbstoffs mit der Linsenoberfläche gesteuert. Ist es erwünscht, den Farbstoff nur auf eine Oberfläche oder auf einen speziellen Teil der Oberfläche aufzutragen, so kann die hergestellte Linse in eine Befestigungseinrichtung oder eine Form eingebracht werden, und die Formulierung des reaktiven Farbstoffs wird nur auf einen speziellen Teil oder spezielle Teile der Linsenoberfläche aufgetragen. Im Hinblick auf die komplizierten bisher allgemein verwendeten Methoden stellt diese einfache mechanische Verfahrensweise zur Tönung von kontaktlinsen einen großen Vorteil dar.

Darüberhinaus können, falls gewünscht, tiefe echte Färbungen leicht erzielt werden, z. B. derart, daß die Linse im gefärbten Teil eine Lichtdurchlässigkeit von 90 % oder weniger in dem gewünschten sichtbaren Farbbereich aufweist und dass sie im wesentlichen im gefärbten Teil frei von Undurchsichtigkeiten ist.

Nach der Durchführung der Reaktion des Linsenmaterials mit dem reaktiven Farbstoff kann nichtumgesetzter Farbstoff unter Verwendung eines geeigneten Lösungsmittels entfernt werden. Die Wahl des Lösungsmittels zur Extraktion oder zum Spülen hängt natürlich von der Löslichkeit des speziellen Farbstoffs ab. Für den Hauptanteil der gegenwärtig verwendeten Farbstoffe sind niedrige Alkohole, wie Methanol, geeignete Lösungsmittel. Nach dem Reinigungsverfahren wird die getönte Linse von Spuren des Lösungsmittels, beispielsweise durch Sieden in destilliertem Wasser, befreit.

Aus wirtschaftlichen Gründen ist es bevorzugt, das bereits polymerisierte Material mit dem Farbstoffpräparat zu behandeln. Es ist jedoch auch möglich, ein Monomeres, wie HEMA, mit reaktivem Farbstoff vor der Polymerisation zu behandeln und anschließend die reaktiven Farbstoff-Monomereinheiten zu polymerisieren.

Durch die Bildung einer kovalenten Bindung zwischen dem die Kontaktlinse bildenden Material und dem reaktiven Farbstoff weisen die erfindungsgemäßen Linsen eine beträchtliche Farbechtheit gegenüber allen Arten von Sterilisationsbehandlungen auf, die gewöhnlich für Kontaktlinsen verwendet werden, wie chemische, enzymatische und Hitzesterilisationen. Da darüberhinaus das färbende Material direkt auf die Oberfläche oder die Oberflächen der Linsen aufgetragen wird, ist der Farbton unabhängig von der Dicke der Linsen. Dies steht in beträchtlichem Kontrast zu Linsen, die aus Kunststoffknöpfen hergestellt werden, in denen das Pigment in die Polymermatrix einbezogen ist, da in dem Falle die Intensität des Farbtons direkt von der Dicke der Linse abhängt. Dies trifft beispielsweise zu für die Kontaktlinsen, die gemäß der US-PS 4 157 872 hergestellt werden.

Da darüberhinaus die erfindungsgemäße Verfahrensweise das Einführen des färbenden Materials zu jedem Zeitpunkt während der Herstellung der gefärbten Linsen ermöglicht, ist es möglich, übliche klare linsen nach Erfüllung einer speziellen Vorschrift zu tönen. So ist es nicht nötig, einen großen Bestand an vorgefärbten Linsen zu halten, was einen wesentlichen Nachteil zahlreicher bekannter Verfahren zur Herstellung getönter Linsen darstellt. Nach dem Einpassen üblicher klarer Linsen kann die Farbe als Endstufe vor der Auslieferung an den Patienten eingeführt werden. Alternativ können vorher vorgeschriebene Linsen später je nach den Bedürfnissen des Trägers für den Kunden getönt werden. Da der Bereich polymeren materialien, die zur Verwendung gemäß der Erfindung geeignet sind, ausreichend breit ist, um praktisch sämtliche gegenwärtig gebräuchlichen Linsenmaterialien zu umfassen, ist die erfindungsgemäße Verfahrensweise fast universell anwendbar.

Ein weiterer Vorteil des erfindungsgemäßen Verfahrens ist die extreme Verringerung der Kosten der Herstellung für die erfindungsgemäßen Kontaktlinsen, im Vergleich mit bekannten Methoden zur Herstellung von Linsen, die mindestens einen zentralen Teil aufweisen, der gefärbt wurde. Geeignete reaktive Farbstoffe sind leicht verfügbar, und die leichte Anwendung dieser Farbstoffe auf die Linsenmaterialien räumt die Notwendigkeit der Anwendung komplizierter Polymerisationsverfahren oder -ausrüstungen aus.

Untersuchungen der Sauerstoffpermeabilität von Linsen, die erfindungsgemäß behandelt wurden, haben gezeigt, daß praktisch keine Änderung der Sauerstoffpermeabilität nach der Behandlung auftritt, was aus der folgenden Tabelle ersichtlich ist :

| | klare Linsen | getönte Linsen (blau) | |
|---|---|---|---|
| | Sauerstoffkonzentration +) ($P_L$) $P_o$ = 6,10) | Durchlässigkeit (bei max. = 587 nm) | Sauerstoffkonz. ($P_L$) ($P_o$ = 6,10) |
| 1. | 1,68 | 68,3 % | 1,71 |
| 2. | 1.,47 | 23,0 % | 1,50 |
| 3. | 1,56 | 9,3 % | 1,51 |
| 4. | 1,66 | 0,0 % | 1,60 |

*) getestet nach der gleichen Technik wie von M. F. Refojo, F. J. Holly und F. L. Leong, Contd. Intraocular Lens Med. J., 3(4), (1977) 27 beschrieben.

Ein weiterer Vorteil der erfindungsgemäßen Linsen liegt darin, daß die meisten zur Tönung verwendeten Farbstoffe zur Absorption von Ultraviolettstrahlung, insbesondere von den Wellenlängen, die sich als schädlich für das Auge erwiesen haben, z. B. gezeigt in Optical Management. « Ultraviolet Radiation and the Ocular Media », Januar 1981, Seiten 21-33, tendieren. Insbesondere wurde berichtet, daß die Ultraviolettstrahlung direkt mit der Entwicklung von Katarakten in Verbindung stehen kann.

Die folgenden Beispiele dienen zur weiteren Erläuterung der Erfindung :

Beispiel 1

Völlig blau auf beiden Seiten der getönten Linsen

Eine Lagerlösung, die während mindestens 5 Wochen stabil ist, wird hergestellt durch Auflösen von 0,1 g eines Farbstoffs mit der Formel

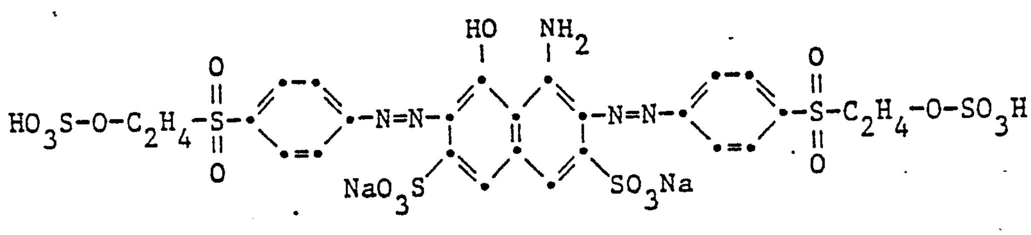

in 10 ml 0,001 m HCl-Lösung. Eine klare HEMA-Linse wird in 1,0 m Natriumcarbonatlösung eingeweicht. Die mit Natriumcarbonat aufgeweichte Linse wird anschließend in 0,11 ml der Lagerlösung eingebracht. 4 ml 1,0 m Natriumcarbonatlösung wird anschließend zugesetzt, und die Linse wird 53 min in der Lösung gelassen. Die getönte Linse wird anschließend mit einer gepufferten Salzlösung (pH=7,0) neutralisiert. Anschließend wird die getönte Linse mit Methanol als Lösungsmittel in einer Lösungsmittelextraktionsvorrichtung extrahiert, bis keine Farbstoffmoleküle mehr ausgelaugt werden. Dies kann leicht beispielsweise durch ein Spektrophotometer bestimmt werden. Nach dem Extraktionsverfahren wird die getönte Linse in siedendem Wasser während 1 h gekocht, um jegliche Spuren von Methanol zu entfernen. Dann wird die getönte Linse in einer Salz-Puffer-Lösung gelagert.

Die Durchlässigkeit der getönten Linse bei einer Wellenlänge von 600 nm beträgt 68 %.

Beispiel 2

Völlig aquamarin auf beiden Seiten der getönten Linse

Eine mind. 3 Wochen stabile Lagerlösung, wird hergestellt durch Auflösen von 0,1 g eines Farbstoffs der Formel

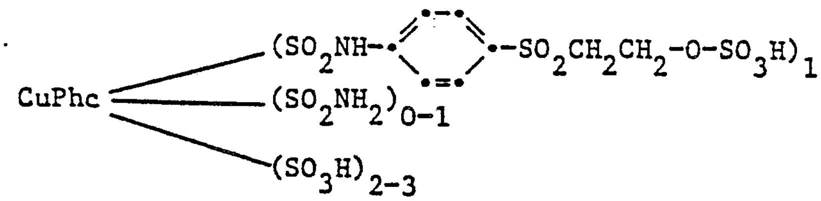

in 10 ml 0,001 m HCl-Lösung. Die Linse, die 10 min in 1,0 m Natriumcarbonatlösung eingeweicht wurde, wird in 1 ml der Lagerlösung eingesetzt. So werden 4 ml 1,0 m Natriumcarbonatlösung zugesetzt, und die Linse wird für die gewünschte Zeit eingeweicht. Die Verfahrensweisen der Wäsche, des Extrahierens und der Spülung der Linse sind gleich wie im Beispiel 1.

Die Durchlässigkeit der getönten Linsen bei einer Wellenlänge von 670 nm beträgt 80 % und 70 % für 2 bzw. 4 h Einweichen.

Beispiel 3

Völlig braun auf beiden Seiten der getönten Linse

Es wurden drei Lagerlösungen für diesen Zweck hergestellt, die alle während mindestens 6 Wochen beständig sind.

A) 0,051 2 g eines Farbstoffs der Formel

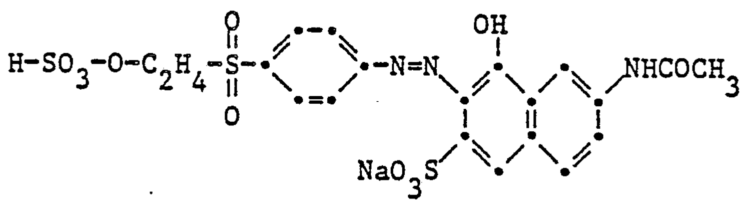

in 5 ml 0,001 m HCl-Lösung

B) 0,057 4 g eines Farbstoffs der Formel

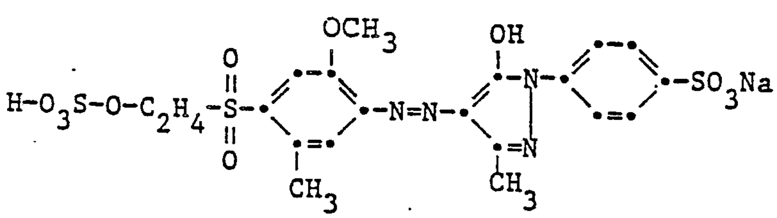

in 5 ml 0,001 m HCl-Lösung.

C) 0,029 1 g eines Farbstoffs der Formel

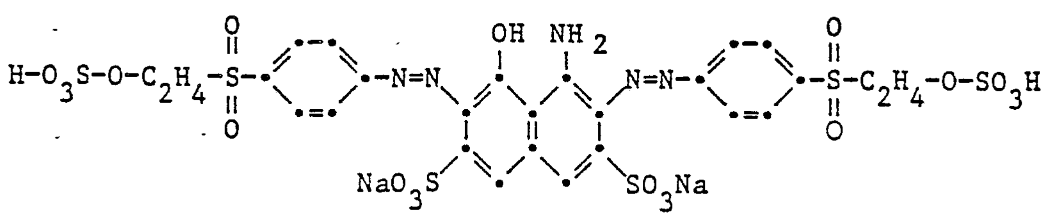

in 5 ml 0,001 m HCl-Lösung.

Die Linse, die in 1,0 m Natriumcarbonatlösung während 10 min eingetaucht war, wird in 0,18 ml A, 0,12 ml B und 0,2 ml C Lagerlösungen eingesetzt. 1 ml 1,0 m Natriumcarbonatlösung wird anschließend zugesetzt, und es wird 1 h stehengelassen. Die Durchlässigkeit der getönten Linse bei Wellenlängen von 400, 490 und 605 nm beträgt 45 %, 51 % bzw. 60 %.

### Beispiel 4

Völlig grün auf beiden Seiten der getönten Linsen

Die Linse, die 10 min in 1,0 m Natriumcarbonat eingeweicht war, wird in 0,18 ml der Lösung C und 0,12 ml der Lösung B, hergestellt gemäß Beispiel 3, eingesetzt. Anschließend wird 1 ml 1,0 m Natriumcarbonatlösung zugesetzt, und die Linse wird 30 min in der Lösung eingeweicht. Die Durchlässigkeit der getönten Linse bei Wellenlängen von 580 und 385 nm beträgt 64 % bzw. 58 %.

### Beispiel 5

Klare Kanten/auf einer Seite getönte Linse

Das Tönungsverfahren ist das gleiche wie in den Beispielen 1 bis 4. Der einzige Unterschied liegt darin, daß die klare Linse in einer Befestigung sitzt. Eine geeignete Farbstofflösung wird anschließend in eine Form eingebracht, anstelle des Eintauchens der Linse in Farbstofflösung. Nur die zu färbende Fläche wird anschließend in Kontakt mit der Farbstofflösung gebracht. Die Endstufen der Verfahrensweise sind die gleichen wie in Beispiel 1.

Die Herstellung einer Befestigungsvorrichtung, die geeignet ist zur Herstellung eines speziellen Typs von gewünschten, teilweise gefärbten Linsen, ist eine mechanisch einfache Aufgabe. Ein Typ einer Befestigungseinrichtung, der sich zur Herstellung von Linsen mit klaren Kanten als brauchbar erwiesen hat, kann wie folgt beschrieben werden :

Die Befestigungsvorrichtung weist drei zusammenpassende Teile auf. Das Bodenstück stellt eine Kuppel dar, auf die Linse aufgesetzt wird. Die gekrümmte Oberfläche der Kuppel hat einen Durchmesser, der dem der zu tönenden Linse entspricht. Das obere Stück wirkt als ein Behälter für die Farbstofflösung und weist eine elastische Dichtung auf. Diese Dicthung schliesst an der Oberfläche der Linse an der Kante der zu tönenden Fläche ab. Das dritte Stück ist ein Gehäuse für die Behälter-Dichtungs-Anordnung. Die gesamte Befestigung wird anschließend in eine Klammer eingebracht, um die Anordnung während des Färbeverfahrens fest an einer Stelle zu halten.

Die Linse, die 10 min in 1,0 m Natriumcarbonat eingeweicht war, wird auf die Kuppel aufgesetzt. Der Behälteranteil der Befestigungseinrichtung wird angebracht und geklammert. Der Behälter wird mit der gewünschten Farbstoffkonzentration und mit Natriumcarbonatlösung gefüllt. Man beläßt die Lösung in Kontakt mit der Linse, bis der gewünschte Farbton erzielt ist. Der Behälter wird mit Wasser gespült, bis sämtliche Spuren der Farbstofflösung entfernt sind. Die Linse wird anschließend aus der Befestigungseinrichtung entnommen.

Gleich gute Ergebnisse können erhalten werden, wenn man beispielsweise Farbstoffe der folgenden Strukturen verwendet :

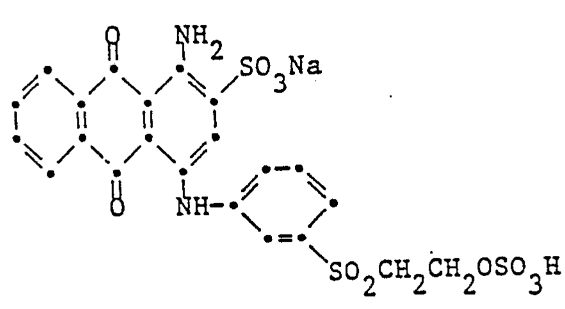

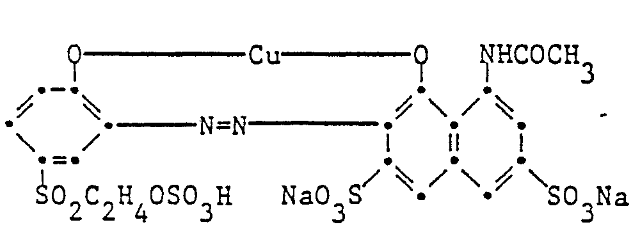

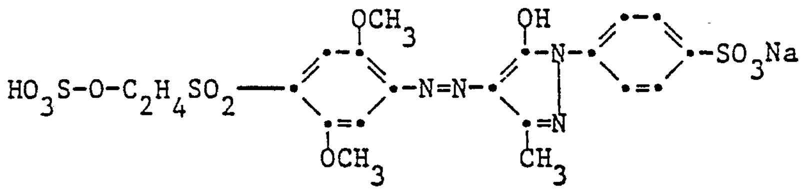

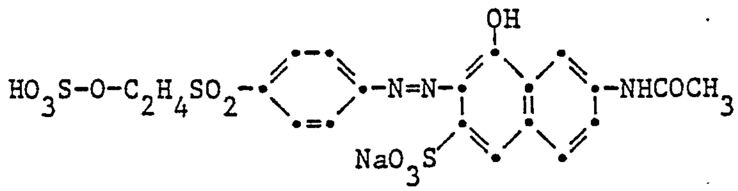

Viele dieser Farbstoffe sind auf dem Markt leicht erhältlich und Farbstoffe dieser Art sind dem Fachmann seit vielen Jahren geläufig. Diese Beispiele dienen lediglich zur Erläuterung, ohne den Rahmen der Erfindung zu beschränken.

**Patentansprüche**

1. Eine Kontaktlinse, von der zumindest ein Teil gefärbt ist, enthaltend ein copolymeres Hydrogelmaterial, das Hydroxyl-, Amino-, Amido- oder Mercaptogruppen enthält, dadurch gekennzeichnet, dass zumindest ein reaktiver Farbstoff der allgemeinen Formel

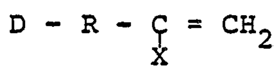 (I)

oder

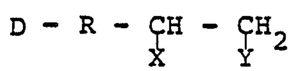 (II)

worin

D der Rest eines organischen Farbstoffs ist;

R eine zweiwertige organische, Elektronen anziehende Gruppe ist, die geeignet ist, einen Abzug von Elektronen von den C-Atomen in den Gruppen $C = CH_2$ oder $CH—CH_2$ der Formeln I und II zu bewirken und diese so zu aktivieren;

X Wasserstoff oder Halogen ist und

Y eine austretende Gruppe ist,

durch Äther-, Thioäther-, Amino- oder Amidogruppen kovalent von aussen an das Polymergerüst gebunden ist.

2. Eine Kontaktlinse nach Anspruch 1, in der der reaktive Farbstoffrest, der an das copolymere Hydrogel gebunden ist, die Formeln

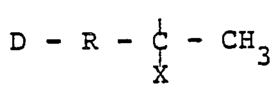

oder

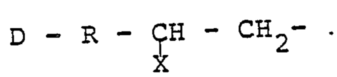

aufweist, worin D, R und X die in Anspruch 1 angegebenen Bedeutungen haben.

3. Eine Kontaktlinse nach Anspruch 2, worin D der Rest eines Azo-, Phthalocyanin-, Azomethin-, Nitro- oder Anthrachinonfarbstoffs ist.

4. Eine Kontaktlinse nach Anspruch 2, worin R —CO—, $—SO_2—$, —SO—, —NHCO— oder $—NHSO_2—$ ist.

5. Eine Kontaktlinse nach Anspruch 1, enthaltend einen gefärbten zentralen Teil und eine klare ringförmige Kante.

6. Verfahren zur Herstellung einer Kontaktlinse gemäss den Ansprüchen 1 bis 5, dadurch gekennzeichnet, dass die Reaktion des Linsenmaterials mit mindestens einem reaktiven Farbstoff der Formel I oder II bei einer Temperatur von bis zu 40 °C durchgeführt wird und anschliessend nicht umgesetzter Farbstoff vom Linsenmaterial entfernt wird.

7. Verfahren nach Anspruch 6, worin die Reaktion in einem wässrigen Medium mit einem pH-Wert von mindestens 9 durchgeführt wird.

8. Verfahren nach Anspruch 6, bei dem das Linsenmaterial in der Form einer Kontaktlinse vorliegt.

9. Verfahren nach Anspruch 6, bei dem der reaktive Farbstoff auf nur einen Teil der Linse aufgetragen wird.

10. Verfahren nach Anspruch 6, bei dem der reaktive Farbstoff die Formel

$$D - R - \underset{X}{C} = CH_2 \qquad (I)$$

oder

$$D - R - \underset{X}{CH} - \underset{Y}{CH_2} \qquad (II)$$

aufweist, worin D, R, X und Y die in Anspruch 1 angegebenen Bedeutungen haben.

11. Verfahren nach Anspruch 10, worin D der Rest eines Azo-, Phthalocyanin-, Azomethin-, Nitro- oder Anthrachinonfarbstoffs ist.

12. Verfahren nach Anspruch 10, worin R —CO—, $—SO_2—$, —NHCO— oder $—NHSO_2—$ ist.

13. Verfahren nach Anspruch 10, bei dem die austretende Gruppe Y, Cl, Br, OH, Dialkylamino, $SO_2$-Phenyl, $OSO_3^- Z^+$, worin $Z^+$ ein Kation ist, $OSO_3R_1$ oder $OSO_2R_1$ ist, worin $R_1$ Alkyl, Aryl, Aralkyl oder Alkaryl bedeutet.

## Claims

1. A contact lens, at least a portion of which is coloured, comprising a copolymeric hydrogel material containing hydroxyl, amino, amido or mercapto groups, in which lens at least one reactive dye of the general formula

$$D - R - \underset{X}{C} = CH_2 \qquad (I)$$

or

$$D - R - \underset{X}{CH} - \underset{Y}{CH_2} \qquad (II)$$

in which formulae

D is the radical of an organic dye ;

R is a divalent organic electron-attracting group capable of causing a withdrawal of the electrons of the carbon atoms in the $C = CH_2$ or $CH—CH_2$ groups of formulae I and II, thus activating the same ;

X is hydrogen or halogen and

Y is a leaving group,

is covalently bonded externally to the polymer backbone through ether, thioether, amino or amido groups.

2. A contact lens according to claim 1, wherein said reactive dyestuff residue, bonded to the copolymeric hydrogel, is of the formula

$$D - R - \underset{X}{\overset{|}{C}} - CH_3$$

or

$$D - R - \underset{X}{CH} - CH_2-$$

in which formulae D, R and X are as defined in claim 1.

3. A contact lens according to claim 2, wherein D is the radical of an azo, phthalocyanine, azomethine, nitro or anthraquinone dye.

4. A contact lens according to claim 2, wherein R is —CO—, —$SO_2$—, —SO—, NHCO— or —$NHSO_2$—.

5. A contact lens according to claim 1, comprising a coloured central portion and a clear annular edge.

6. A process for preparing a contact lens according to any one of claims 1 to 5, which process comprises carrying out the reaction of the lens material with at least one reactive dye of formula I or II at a temperature of up to 40 °C, and subsequently removing unreacted dyestuff from said lens material.

7. A process according to claim 6, wherein the reaction is conducted in an aqueous medium having a pH of at least 9.

8. A process according to claim 6, wherein said lens material is in the form of a contact lens.

9. A process according to claim 6, wherein the reactive dyestuff is applied to only a portion of said lens.

10. A process according to claim 6, wherein said reactive dyestuff is of the formula

$$D - R - \underset{X}{C} = CH_2 \qquad (I)$$

or

$$D - R - \underset{X}{CH} - \underset{Y}{CH_2} \qquad (II)$$

in which formulae D, R, X and Y are as defined in claim 1.

11. A process according to claim 10, wherein D is the radical of an azo, phthalocyanine, azomethine, nitro or anthraquinone dye.

12. A process according to claim 10, wherein R is —CO—, —$SO_2$—, —NHCO— or —$NHSO_2$—.

13. A process according to claim 10, wherein the leaving group Y is Cl, Br, OH, dialkylamino, $SO_2$-phenyl, $OSO_3^-$ $Z^+$ where Z is a cation, $OSO_3R_1$ or $OSO_2R_1$ where $R_1$ is alkyl, aryl, aralkyl or alkaryl.

**Revendications**

1. Lentille de contact dont au moins une partie est colorée, contenant une matière d'hydrogel copolymère, qui contient des groupes hydroxyle, amino, amido, ou mercapto, caractérisée en ce qu'au moins un colorant réactif de formule générale

$$D - R - \underset{X}{C} = CH_2 \qquad (I)$$

ou

$$D - R - \underset{X}{CH} - \underset{Y}{CH_2} \qquad (II)$$

où

D est le radical d'un colorant organique ;

R est un groupe électrophile organique bivalent qui convient pour provoquer un enlèvement d'électrons des atomes de carbone dans les groupes C = $CH_2$ ou CH—$CH_2$ de formules I et II et ainsi pour les activer ;

X est un hydrogène ou un halogène et

Y est un groupe sortant,

est lié de façon covalente de l'extérieur sur l'ossature de polymère par des groupes éther, thioéther, amino ou amido.

2. Lentille de contact selon la revendication 1, où le radical colorant réactif qui est lié à l'hydrogel copolymère présente les formules

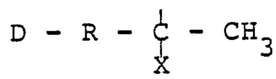

ou

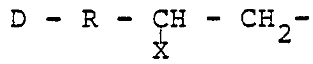

où D, R et X ont les significations données dans la revendication 1.

3. Lentille de contact selon la revendication 2, où D est le radical d'un colorant azo, phthalocyanine, azométhine, nitro ou anthraquinone.

4. Lentille de contact selon la revendication 2, où R est —CO—, —$SO_2$—, —SO—, —NHCO— ou —$NHSO_2$.

5. Lentille de contact selon la revendication 1, contenant une partie centrale colorée et un bord annulaire clair.

6. Procédé de préparation d'une lentille de contact selon les revendications 1 à 5, caractérisé en ce que la réaction de la matière de lentille avec au moins un colorant réactif de formule I ou II est conduite à une température allant jusqu'à 40 °C puis en ce qu'on enlève de la matière de lentille le colorant n'ayant pas réagi.

7. Procédé selon la revendication 6, où la réaction est conduite en milieu aqueux avec un pH d'au moins 9.

8. Procédé selon la revendication 6, où la matière de lentille se présente sous la forme d'une lentille de contact.

9. Procédé selon la revendication 6, où le colorant réactif n'est déposé que sur une partie de la lentille.

10. Procédé selon la revendication 6, dans lequel le colorant réactif présente la formule

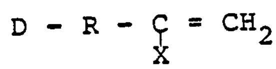

(I)

ou

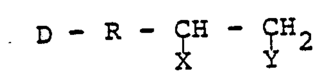

(II)

où D, R, X et Y ont les significations données dans la revendication 1.

11. Procédé selon la revendication 10, où D est le radical d'un colorant azo, phthalocyanine, azométhine, nitro ou anthraquinone.

12. Procédé selon la revendication 10, où R est —CO—, —$SO_2$—, —NHCO— ou —$NHSO_2$—.

13. Procédé selon la revendication 10, où le groupe sortant Y représente Cl, Br, OH, dialcoylamino, $SO_2$-phényle, $OSO_3^-Z^+$, où $Z^+$ est un cation, $OSO_3R_1$ ou $OSO_2R_1$, où $R_1$ représente un alcoyle, aryle, aralcoyle ou alcaryle.